(19)

Europäisches Patentamt
European Patent Office
Office européen des brevets

(11) **EP 0 718 599 B2**

(12) **NEW EUROPEAN PATENT SPECIFICATION**
After opposition procedure

(45) Date of publication and mention
of the opposition decision:
**16.03.2011 Bulletin 2011/11**

(45) Mention of the grant of the patent:
**08.09.2004 Bulletin 2004/37**

(21) Application number: **95120185.4**

(22) Date of filing: **20.12.1995**

(51) Int Cl.:
*G01D 5/245* (2006.01)      *G01D 5/36* (2006.01)

(54) **Incremental encoder**

Inkrementaler Geber

Encodeur pas à pas

(84) Designated Contracting States:
**CH DE LI SE**

(30) Priority: **22.12.1994 JP 33626894**

(43) Date of publication of application:
**26.06.1996 Bulletin 1996/26**

(73) Proprietor: **Kabushiki Kaisha TOPCON**
**Tokyo 174 (JP)**

(72) Inventors:
• **Ohtomo, Fumio**
**Tokyo, 174 (JP)**

• **Hayashi, Kunihiro**
**Tokyo, 174 (JP)**
• **Osaragi, Kazuki**
**Tokyo, 174 (JP)**

(74) Representative: **Altenburg, Udo et al**
**Bardehle Pagenberg**
**Galileiplatz 1**
**81679 München (DE)**

(56) References cited:
**EP-A- 0 268 558      EP-A- 0 334 018**
**WO-A-92/04599      WO-A-92/04601**
**DE-A- 4 037 545      DE-C- 2 416 212**

EP 0 718 599 B2

## Description

BACKGROUND OF THE INVENTION

The present invention relates to an incremental encoder according to claim 1.

Encoders have been widely used for electrically measuring distances and angles. Optical encoders and magnetic encoders are quite analogous in basic configuration.

Rotary encoders have been prevalently used for the electrical measurement of angles. Optical encoders, in particular, incorporate advanced optical techniques, are capable of measurement in high accuracy and high resolution, have high resolving power and immune to disturbances, such as external magnetism, and have a long lifetime owing to their noncontact measuring operation.

Optical encoders having such excellent features are applied to, for example, surveying instruments for measuring angles.

Optical encoders employed in current surveying instruments are classified into those of the absolute system, i.e., absolute optical encoders, and those of the incremental system, i.e., incremental optical encoders.

In an absolute optical encoder, angle and position on a circumference are in one-to-one correspondence, and positions on a circumference are registered as absolute addresses. Therefore, position information about any position can be obtained. However, an absolute optical encoder has a complex construction and it is very difficult to construct an absolute optical encoder in a compact, lightweight construction to build the absolute optical encoder in a surveying instrument.

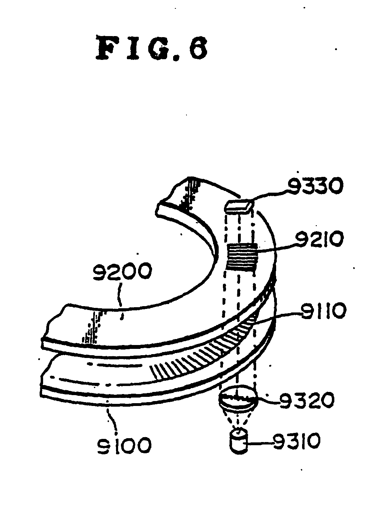

As shown in Fig. 6, an incremental optical encoder comprises a rotor 9100 provided with a main scale 9110, a stator 9200 provided with a subscale 9210, and a detecting means 9300 having components disposed with the rotor 9100 and the stator 9200 therebetween. The main scale 9110 formed on the rotor 9100 has graduation lines arranged at equal angular pitches, for example, angular pitches of 80 sec, in the periphery of the rotor 9100 in an occulting pattern. The subscale 9210 formed on the stator 9200 has graduation lines arranged at angular pitches equal to those of the main scale 9110 in an occulting pattern. The detecting means 9300 comprises an LED 9310, a collimator lens 9320 and a photosensor 9330. The LED 9310 and the photosensor 9330 are disposed with the rotor 9100 and the stator 9200 therebetween. When the rotor 9100 rotates, the light emitted by the LED 9310 is interrupted once every time the rotor 9100 turns through an angle corresponding to one pitch of the main scale 9110, and the photosensor 9330 provides an electric signal indicating the interruption of the light. The electric signals provided by the photosensor 9330 are counted to detect the angle through which the rotor 9100 has turned.

The incremental optical encoder is able to start counting the output signals of the photosensor 9330 from any position of the rotor 9100 and to measure the angle of turn of the rotor 9100 from the position where counting the output signals of the photosensor 9330 is started.

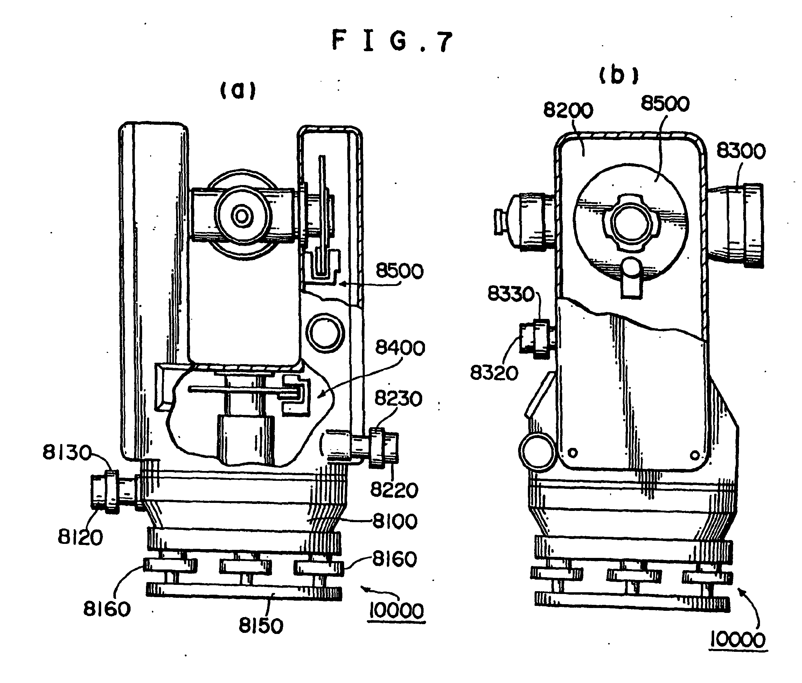

A surveying instrument employing an incremental optical encoder will be described with reference to Figs. 7(a) and 7(b). A surveying instrument 10000 comprises a base unit 8100, a standard unit 8200 rotatably mounted on the base unit 8100 in a horizontal plane, a sighting telescope 8300 supported on the standard unit 8200 for turning in a vertical plane, a first detector 8400 for detecting the horizontal angle of the standard unit 8200, and a second detector 8500 for detecting the elevation angle of the sight line of the telescope 8300.

The base unit 8100 is connected to a leveling plate 8150 to be fixedly mounted on a tripod or the like by leveling screws 8160. The level of the surveying instrument 10000 can be adjusted by turning the leveling screws 8160. The base unit 8100 is provided with a lower adjusting knob 8120 and a lower clamp knob 8130 to adjust and fix the base unit 8100. The standard unit 8200 is provided with an upper adjusting knob 8220 and an upper clamp knob 8230 to adjust and fix the standard unit 8200. The sighting telescope 8300 is provided with an elevation adjusting knob 8320 and an elevation clamp knob 8330 to adjust the elevation angle in the sighting direction of the sighting telescope 8300 and to fix the sighting telescope 8300 in an adjusted sighting direction.

An optical encoder included in the second detector 8500 detects the elevation angle of the sighting direction of the sighting telescope 8300 with respect to, for example, the zenith. The optical encoder of the second detector 8500 is provided with an index for zero detection to determine an angle from a reference. The signals are counted using the index as a reference point or a zero point to measure the angle. An optical encoder included in the first detector 8400 for measuring the horizontal angle of the standard unit 8200 has no particular reference direction and hence does not need any reference point. Therefore, the optical encoder is an ordinary one not provided with any index.

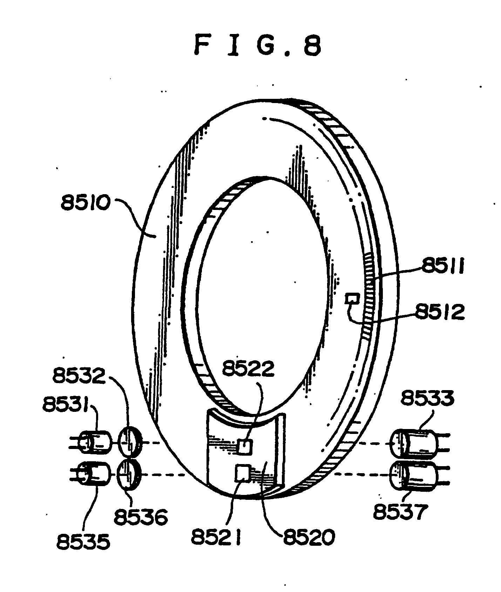

The incremental optical encoder provided with an index of the second detector 8500 will be described with reference to Fig. 8. The incremental optical encoder of the second detector 8500 comprises a rotor 8510, a stator 8520, and an optical detector 8530 comprising components disposed with the rotor 8510 and the stator 8520 therebetween. The rotor 8510 is provided in its periphery with a main scale 8511 having graduation lines formed at equal angular pitches, and a zero detection index 8512. The stator 8520 is provided with a first subscale 8521 for use in combination with the main scald 8511, and a second subscale 8522 for use in combination with the zero detecting index 8512. The optical detector 8530 comprises an index detecting unit and a main scale detecting unit. The index detecting unit comprises a first light emitting device 8531, a first collimator lens 8532 and a first photosensor 8533 and is capable of detecting the zero detecting index 8512 of the rotor 8510. The main scale detecting unit comprises a second light emitting device 8536, a second collimator lens 8536 and a second photosensor 8537. The main scale detecting unit detects light pulses produced by the occulting pattern of the main scale 8511 of the rotor 8510, the second photosensor 8537 converts the light pulses into corresponding electric signals. The electric signals are counted to determine an angle from a zero detection point.

A method of using the conventional surveying instrument 10000 thus constructed will be described. The leveling plate 8150 of the surveying instrument 10000 is mounted on a tripod, and the leveling plate 8150 is leveled by turning the leveling screws 8160. Then, a main switch is closed and the sighting telescope 8300 is turned one full turn to complete preparations. When the sighting telescope 8300 is turned, the rotor 8510 of the second detector 8500 is turned, the zero detecting index 8512 sets a zero point to measure an angle from the zero point.

This conventional surveying instrument 10000 needs to turn one full turn the sighting telescope 8300 provided with the second detector 8500 including the incremental optical encoder provided with the index; that is, the zero detecting index 8512 of the rotor 8510 must be detected by the index detecting unit of the optical detector 8530 by turning the sighting telescope 8300 one full turn. The sighting telescope 8300 needs to be turned one full turn because the index 8512, in general, is invisible from outside. If the sighting telescope 8300 is turned quickly, the index detecting unit of the optical detector 8530 is unable to detect the zero detecting index 8512 of the rotor 8510 and hence measurement cannot be made. Accordingly, the sighting telescope 8300 must be turned at an appropriate turning speed below a certain turning speed, the appropriate turning speed is dependent unavoidably on user's intuition, which is very troublesome.

EP-A-0 268 558 discloses an incremental encoder comprising a rotor provided with a main scale and two subscales, as well as a detecting means with a light source, an optical system and a light-receiving unit. The index pitches of each scale are described to be constant.

WO92/04599 discloses an incremental encoder for measuring lengths.

## SUMMARY OF THE INVENTION

It is therefore an object of the present invention to provide an incremental encoder having a plurality of indices and capable of detecting a reference point or a zero point without turning the rotor one full turn. A further object is to provide a method of determining a reference point by using an incremental encoder. According to the invention, these objects are achieved by the incremental encoder with the features of claim 1.

## BRIEF DESCRIPTION OF THE DRAWINGS

Fig. 1 is a perspective view of an incremental encoder 1000 in a preferred embodiment according to the present invention;
Fig. 2 is a plan view of a rotor 100 included in the incremental encoder 1000;
Fig. 3(a) is a diagram of assistance in explaining the principle of the present invention;
Fig. 3(b) is a block diagram of assistance in explaining the electrical configuration of the incremental encoder 1000 of Fig. 1;
Fig. 4 is a flow chart of assistance in explaining the operation of the incremental encoder 1000 of Fig. 1;
Fig. 5 is a block diagram of an electronic circuit included in the incremental encoder 1000 of Fig. 1; and
Figs. 6, 7(a), 7(b) and 8 are views of assistance in explaining a conventional surveying instrument.

## DESCRIPTION OF THE INVENTION

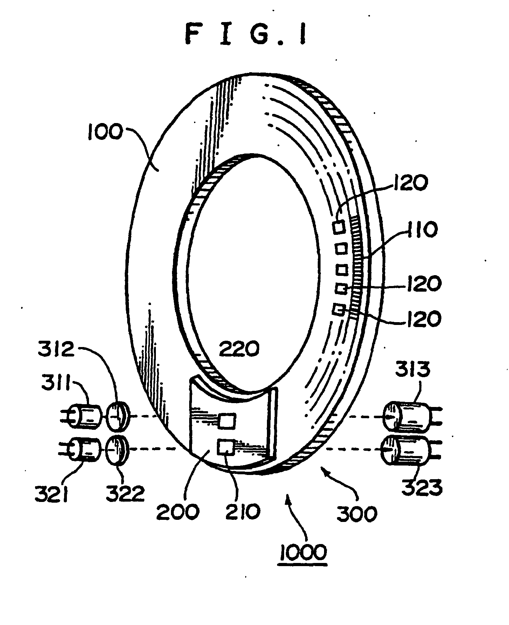

Referring to Fig. 1, an incremental encoder 1000 in a preferred embodiment according to the present invention comprises a rotor 100, a stator 200, and an optical detector 300 having components disposed with the rotor 100 and the stator 200 therebetween. The rotor 100 is provided in its periphery with a main scale 110 having graduation lines formed at equal angular pitches, and a plurality of zero detecting indices 120. The stator 200 is provided with a first subscale 210 for use in combination with the main scale 110, and a second subscale 220 for use in combination with the zero detecting indices 120. The optical detector 300, i.e., a detecting means, comprises an index detecting unit 310 and a main scale detecting unit 320. The index detecting unit 310, which is capable of detecting the zero detecting indices 120, comprises a first light emitting device 311, a first collimator lens 312 and a first photosensor 313. The main scale detecting unit 320 comprises a second light emitting device 321, a second collimator lens 322 and a second photosensor 323. The main scale detecting unit 320 detects light pulses produced by the occulting pattern of the main scale 110, and the second photosensor 323 converts the light pulses into corresponding electric signals. The electric signals provided by the second photosensor 323 are counted to detect an angle from a zero detection point. The first light emitting device 311 and the second light emitting device 321 may be light emitting devices of any types, such as LEDs. The first photosensor 313 and the second photosensor 323 may be photosensors of any types, provided that the photosensors are capable of photoelectric conversion.

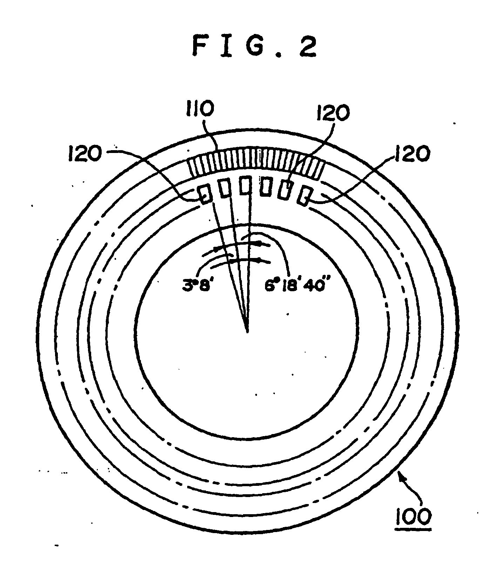

The main scale 110 and the zero detecting indices 120 of the rotor 100 will be described with reference to Fig. 2. The main scale 110 is an occulting pattern of graduation lines formed at equal angular pitches in the periphery of the rotor 100. The zero detecting indices 120 are formed in the periphery of the rotor 100 at different angular pitches so that the numbers of the graduation lines of the main scale 110 corresponding to the pitches between the adjacent indices 120 are different from each other. Suppose that the indices $I_1$, $I_2$, ... and $I_N$, are formed and the position of the index $I_N$ is expressed by:

$$I_N = 3°8'0'' \times N + 2'40'' \times (N - 1)$$

Then, the respective positions of the indices $I_1$ and $I_2$ are 3°8'0'' and 6°18'40''.

These different pitches between the zero detecting indices 120 thus arranged increases in a specific direction.

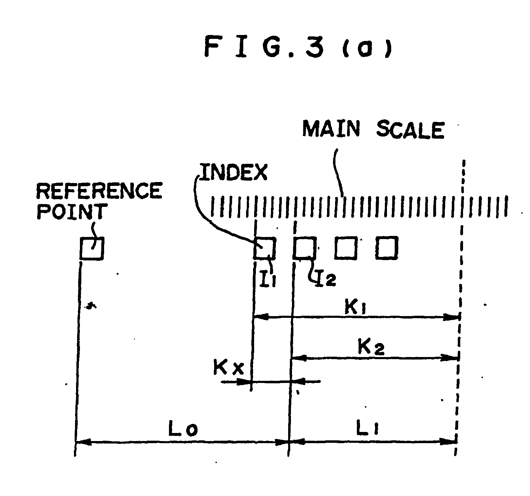

Referring to Fig. 3(a), suppose that $K_1$ is the number of the graduation lines of the main scale 110 between the position of the index $I_1$ and an optional position, and $K_2$ is the number of the graduation lines of the main scale 110 between the position of the index $I_2$ and the same optional point. Then, the number $K_1$ is subtracted from the number $K_2$; $K_x = |K_2 - K_1|$, where $K_x$ is the number of the graduation lines between the respective positions of the indices $I_1$ and $I_2$. Since the different pitches between the indices 120 increases in the specific direction, the distance $L_0$ between a reference point (zero point) and the position of the index $I_2$ can be determined by using the number $K_x$; that is, the number $K_x$ and the distance between the reference point (zero point) and the index 120 are in a one-to-one correspondence. The distance $L_1$ between the position of the index $I_2$ and the optional position can be known from the number $K_2$. The distance between the reference point (zero point) and the optional position is $L_0 + L_1$, i.e., the sum of the distance $L_0$ between the reference point (zero point) and the position of the index $I_2$ and the distance $L_1$ between the position of the index $I_2$ and the optional position.

Thus, the present invention is applicable to a rotary encoder for detecting an angle by arranging the indices on a circle.

In this specification, the specific index $I_1$ is a discretionally determined, and the next index $I_2$ may be an index immediately behind the index $I_1$ or an index several pitches behind the index $I_1$. Accordingly, the present invention enables the measurement of distance or angle from any position.

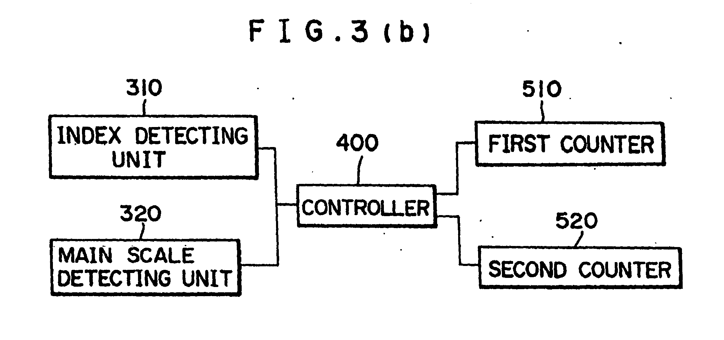

Referring to Fig. 3(b), the incremental encoder 1000 has the index detecting unit 310, the main scale detecting unit 320, a controller 400, a first counter 510 and a second counter 520.

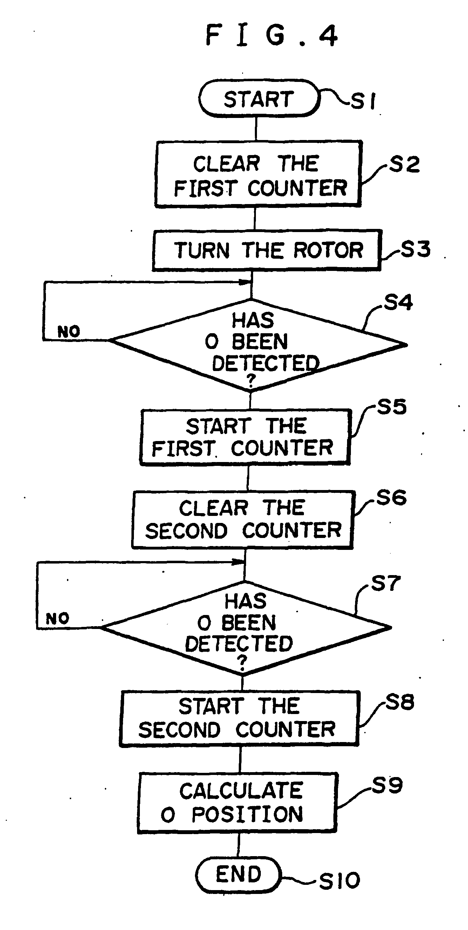

The operation of the incremental encoder 1000 will be described with reference to Fig. 4. The incremental encoder 1000 is connected to a power supply to start angle measurement in step S1, the first counter 510 is cleared in step S2, and then the rotor 100 is turned in step S3. In step S4, a query is made to see whether the index detecting unit 310 has detected the first index $I_1$. Step S5 is executed when the response in step S4 is affirmative, i.e., if the first index $I_1$ has been detected, or step S4 is repeated when the response in step S4 is negative, i.e., if the first index $I_1$ has not been detected. In step S5, the first counter 510 starts counting pulse signals provided by the main scale detecting unit 320 and representing light pulses produced by the occulting pattern, and the second counter 520 is cleared in step S6.

In step S7, a query is made to see whether the index detecting unit 310 has detected the second index $I_2$. Step S8 is executed when the response in step S7 is affirmative, i.e., if the second $I_2$ has been detected, or step S7 is repeated when the response in step S7 is negative, i.e., if the second index $I_2$ has not been detected. In step S8, the second counter 520 starts counting pulse signals provided by the main scale detecting unit 320 and representing light pulses produced by the occulting pattern and the counting operation of the second counter 520 is continued to an optional position.

In step S9, the controller 400 calculates the difference between the respective counts of the first counter 510 and the second counter 520 to calculate or call an angle between the zero point and the position of the index $I_2$ corresponding to the calculated difference between the counts. The controller 400 calculates the angle between the position of the index $I_2$ and an optional position on the basis of the count indicating the position of the index $I_2$. The angle between the zero point and the optional point can be determined by adding the angle between the position of the index $I_2$ and the optional position, and the angle between the zero point and the position of the index $I_2$. The first counter 510 and the second counter 520 may be cleared upon the connection of the incremental encoder 1000 to the power supply.

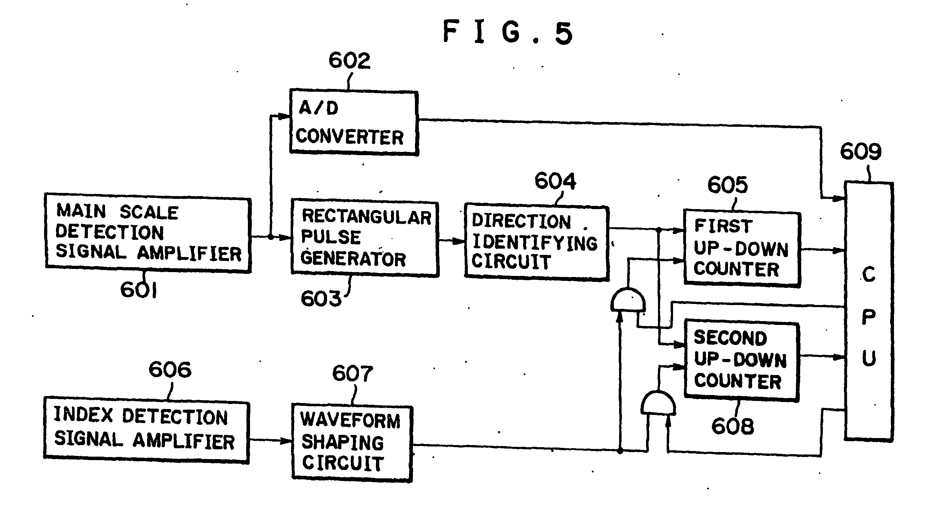

The electrical configuration of an electronic circuit included in the incremental encoder 1000 will be described with reference to Fig. 5 by way of example. The electronic circuit comprises a main scale detection signal amplifier 601, an A/D converter 602, a rectangular pulse generator 603, a direction identifying circuit 604, a first up-down counter 605, an index detection signal amplifier 606, a waveform shaping circuit 607, a second up-down counter 608 and a CPU 609.

The main scale detection signal amplifier 601 amplifies electric signals provided by the second photosensor 323. The A/D converter 602 converts the output signals of the main scale detection signal amplifier 601 into corresponding digital signals and gives the same to the CPU 609. The first up-down counter 605 corresponds to the first counter 510, and the second up-down counter 608 corresponds to the second counter 520. The direction identifying circuit 604 identifies the directions of rotation or the direction of increase or decrease. The index detection signal amplifier 606 amplifies electric signals provided by the first photosensor 313.

The output signal of the main scale detection signal amplifier 601 is given to the A/D converter 602 and the rectangular pulse generator 603. The output signal of the main scale detection signal amplifier 601 is given to the A/D converter 602 as a signal for interpolation and to the rectangular pulse generator 603 as a count signal. The rectangular pulse generator 603 generates a count signal of rectangular pulses, the direction identifying circuit 604 identifies the direction of rotation or the direction of increase or decrease, and the output signal of the direction identifying circuit 604 is given to the first up-down counter 605 and the second up-down counter 608. The digital output signal for interpolation provided by the A/D converter 602 is given as an interpolation data to the CPU 609.

The waveform of the output signal of the index detection signal amplifier 606 is shaped by the waveform shaping circuit 607, and the output signal of the waveform shaping circuit 607 is given as a start signal to the first up-down counter 605 and the second up-down counter 608. The start signal is given to the first up-down counter 605 only when a control signal provided by the CPU 609 is ON. Similarly, the start signal is given to the second up-down counter 608 only when the control signal provided by the CPU 609 is ON. When the start signal is given to the first up-down counter 605 and the second up-down counter 608 with the control signal provided by turning on the CPU 609, the up-down counters 605 and 608 start counting operation.

The first up-down counter 605 is cleared upon the connection of the incremental encoder 1000 to the power supply, and the first up-down counter 605 starts counting operation when the first start signal is given thereto with the control signal provided by the CPU 609 ON. When a count start signal is given to the CPU 609, the control signal given to the first up-down counter 605 goes OFF and the control signal given to the second up-down counter 608 goes ON. When next index is detected, a start signal is given to the second up-down counter 608 to make the second up-down counter 608 start counting operation.

This electronic circuit is capable of carrying out the operation shown in Fig. 4. The rest of the techniques and their application to surveying instruments are the same as the conventional techniques and hence the description thereof will be omitted.

As is apparent from the foregoing description, according to the present invention, the rotor is provided with the main scale, the stator is provided with the first subscale, the light source unit, the optical system and the light-receiving unit of the detecting means are disposed with the rotor and the stator therebetween, the indices for detecting the reference position are formed on the rotor, and the second subscale for indexing is formed on the stator. Therefore, the rotor need not be turned one full turn for the detection of the zero point, and the zero point can be detected by turning the rotor through a small angle to start angle measurement.

The indices are formed at different pitches. The indices are formed at different pitches increasing in a specific direction.

The detecting means detects the specific index $I_1$ and counts the graduation lines of the main scale until the next index $I_2$ is detected, the reference point is determined by calculation on the basis of the counted number of the graduation lines of the main scale, and the angle or the distance between the reference point and the position of the index $I_2$ can be determined.

The detecting means detects the specific index $I_1$ and counts the graduation lines of the main scale until the next index $I_2$ is detected, the reference point is determined by calculation on the basis of the counted number of the graduation lines of the main scale, the angle or the distance between the reference point and the position of the index $I_2$ is determined, the angle or the distance between the position of the index $I_2$ and an optional position is determined on the basis of the corresponding number of graduation lines of the main scale, and the angle or the distance between the reference point and the optional position can be determined by adding the angle or the distance between the reference point and the index $I_2$ to the angle or the distance between the position of the index $I_2$ and the optional point.

Naturally, the present invention is applicable to magnetic encoders and rotary encoders.

Even if the sighting telescope of the surveying instrument incorporating the present invention is turned quickly and errors are introduced in angle calling, angle calling can be easily restarted simply by swinging the sighting telescope through a small angle in a vertical plane.

The incremental encoder of the present invention is small in size and is capable of high performance and of preventing the deterioration of the accuracy even if the incremental encoder is operated sharply.

**Claims**

1.  A rotary encoder comprising:

    a rotor (100) provided with a main scale (110) including graduation lines and with a plurality of indices (120) for detecting a reference point, said indices (120) being arranged at pitches of different numbers of the graduation lines, said pitches increasing in a specific direction;
    a stator (200) provided with a first subscale (210) and with a second subscale (220) for use in combination with said indices (120); and
    a detecting means comprising a light source unit (311; 321), an optical system (312; 322) and a light receiving unit (313; 323), rotor (100) and said stator (200) being disposed between said light source unit (311; 321) and said light receiving unit (313; 323), wherein the detecting means (300) detects a specific index ($I_1$) and starts counting the graduation lines of the main scale (110) in a first up/down counter (605) until the detecting means (300) detects the next index ($I_2$), a set reference point is determined by calculation on the basis of the counted number of graduation lines of the main scale (110), and then the angle between the reference point and the position of said next index ($I_2$) is determined, wherein the angle between said next index ($I_2$) and an optional position is determined on the basis of the corresponding number graduation lines of the main scale (110) counted in a second up/down counter (608) which is started after the detecting means (300) has detected said next index, and the angle between the reference point and the optional position is determined by adding the angle between the reference point and the position of said next index ($I_2$) to the angle between said next index ($I_2$) and the optional position;

a controller (609) operationally connected with the first (605) and the second (608) up/down counter to enable starting said counters.

## Patentansprüche

**1.** Rotierender Kodierer, umfassend

einen Rotor (100), ausgestattet mit einer Hauptskala (110), die Teilstriche und eine Vielzahl von Indizes (120) zum Erfassen eines Referenzpunktes umfasst, wobei die Indizes in Abständen von verschiedenen Anzahlen von Teilstrichen angeordnet sind, wobei die Abstände in einer bestimmten Richtung zunehmen;

einen Stator (200), ausgestattet mit einer ersten Unterskala (210) und mit einer zweiten Unterskala (220) zur Benutzung in Kombination mit den Indizes (120); und

ein Erfassungsmittel (300), umfassend eine Lichtquelleneinheit (311; 321), ein optisches System (312; 322) und eine lichtempfangende Einheit (313; 323), wobei der Rotor (100) und der Stator (200) zwischen der Lichtquelleneinheit (311, 321) und der lichtempfangenden Einheit (313, 323) angeordnet sind, wobei das Erfassungsmittel (300) einen bestimmten Index ($I_1$) erfasst und beginnt, die Teilstriche der Hauptskala (110) in einem ersten Vorwärts-/Rückwärtszähler (605) zu zählen, bis das Erfassungsmittel (300) den nächsten Index ($I_2$) erfasst, ein gesetzter Referenzpunkt durch Berechnung auf Basis der gezählten Anzahl von Teilstrichen der Hauptskala bestimmt wird und dann der Winkel zwischen dem Referenzpunkt und der Position des nächsten Index ($I_2$) bestimmt wird, wobei der Winkel zwischen dem nächsten Index ($I_2$) und einer optionalen Position auf der Basis der entsprechenden Anzahl von Teilstrichen der Hauptskala (110) in einem zweiten Vorwärts-/Rückwärtszähler (608) gezählt wird, der gestartet wird, nachdem das Erfassungsmittel (300) den nächsten Index erfasst hat und der Winkel zwischen dem Referenzpunkt und der optionalen Position durch Addieren des Winkels zwischen dem Referenzpunkt und der Position des nächsten Index ($I_2$) zu dem Winkel zwischen dem nächsten Index ($I_2$) und der optionalen Position bestimmt wird;

ein Controller (609), der operativ mit dem ersten (605) und dem zweiten (608) Vorwärts-/Rückwärtszähler verbunden ist, um das Starten der Zähler freizugeben.

## Revendications

**1.** Un codeur rotatif, comprenant :

un rotor (100) pourvu d'une échelle principale (110) comprenant des lignes de graduations et avec une pluralité d'index (120) pour détecter un point de référence, lesdits index (120) étant configurés à des pas de nombres différents des lignes de graduation, lesdits pas augmentant dans une direction particulière ;

un stator (200) pourvu d'un première sous-échelle (210) et d'une seconde sous-échelle (220) utilisable en combinaison avec lesdits index (120) ; et

un moyen de détection (300) comprenant un bloc de source lumineuse (311 ; 321), un système optique (312 ; 322) et un bloc de réception de lumière (313 ; 323), le rotor (100) et ledit stator (200) étant disposés entre ledit bloc de source lumineuse (311 ; 321) et ledit bloc de réception de lumière (313 ; 323), où le moyen de détection (300) détecte un index spécifique ($I_1$) et démarre le comptage des lignes de graduation de l'échelle principale (110) dans un premier compteur ascendant/descendant (605) jusqu'à ce que le moyen de détection (300) détecte l'index suivant ($I_2$), un point de référence de consigne est déterminé par le calcul sur la base du nombre compté de lignes de graduations de l'échelle principale (110), et ensuite l'angle entre le point de référence et la position dudit indice suivant ($I_2$) est déterminée, et

dans lequel l'angle entre ledit index suivant ($I_2$) et une position optionnelle est déterminé sur la base du nombre correspondant de lignes de graduation de l'échelle principale (110) compté dans un second compteur ascendant/descendant (608) qui est démarré après que le moyen de détection (300) ait détecté ledit index suivant, et l'angle entre le point de référence et la position optionnelle est déterminé en ajoutant l'angle entre le point de référence et la position dudit index suivant ($I_2$) à l'angle entre ledit index suivant ($I_2$)

et la position optionnelle ;
un contrôleur relié de manière opérante au premier (605) et au second (608) compteur ascendant/descendant pour activer le démarrage desdits compteurs.

# F I G . 1

# F I G . 2

# F I G. 3 (a)

MAIN SCALE

INDEX

REFERENCE POINT

$I_1$   $I_2$

$K_1$

$K_2$

$K_x$

$L_0$   $L_1$

# F I G . 3 (b)

INDEX DETECTING UNIT — 310
MAIN SCALE DETECTING UNIT — 320
CONTROLLER — 400
FIRST COUNTER — 510
SECOND COUNTER — 520

EP 0 718 599 B2

# F I G . 4

```
        ( START )  S1
           │
           ▼
   ┌─────────────────┐
   │    CLEAR  THE   │  S2
   │  FIRST COUNTER  │
   └─────────────────┘
           │
           ▼
   ┌─────────────────┐
   │  TURN THE ROTOR │  S3
   └─────────────────┘
           │
           ▼
         ╱─────╲
   NO  ╱   HAS   ╲  S4
 ◄────┤  O BEEN   │
       ╲ DETECTED ╱
         ╲   ?  ╱
           │
           ▼
   ┌─────────────────┐
   │    START  THE   │  S5
   │  FIRST  COUNTER │
   └─────────────────┘
           │
           ▼
   ┌─────────────────┐
   │    CLEAR  THE   │  S6
   │  SECOND COUNTER │
   └─────────────────┘
           │
           ▼
         ╱─────╲
   NO  ╱   HAS   ╲  S7
 ◄────┤  O BEEN   │
       ╲ DETECTED ╱
         ╲   ?  ╱
           │
           ▼
   ┌─────────────────┐
   │    START  THE   │  S8
   │  SECOND COUNTER │
   └─────────────────┘
           │
           ▼
   ┌─────────────────┐
   │    CALCULATE    │  S9
   │   O POSITION    │
   └─────────────────┘
           │
           ▼
        ( END )  S10
```

12

# F I G . 5

EP 0 718 599 B2

# FIG.6

9330

9210

9200

9110

9100

9320

9310

FIG.7

(a)

8500

8400

8230

8220

8100

8160

10000

8150

8160

8130

8120

(b)

8300

8500

8200

8330

8320

10000

# F I G . 8

8510

8511

8512

8532

8531

8522

8533

8535

8536

8521

8520

8537

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0268558 A

- WO 9204599 A